# EUROPEAN PATENT APPLICATION

(11) **EP 4 696 883 A1**
(43) Date of publication of application: **18.02.2026**
(21) Application number: 24194629.2
(22) Date of filing: 14.08.2024
(51) Int. Cl.: F03D 3/00, F03D 7/02, F03D 7/06

(54) **VERTICAL-AXIS WIND TURBINE CONTROL**

(71) Applicant: Aeronovis S.A., 4490 Belvaux (LU)
(72) Inventor: DIEDERICH, Frank, L-4490 Belvaux (LU)
(74) Representative: Aronova

(57) **Abstract**

A lift-type VAWT (10), comprises a rotor (12), a generator, a drive train for transmitting mechanical power from the rotor to the generator (20), a braking system including an eddy-current brake (22) and at least one friction brake (24), and a control system (36). The drive train comprises a primary shaft (14) carrying the rotor, a secondary shaft (18) connected to the generator, and a transmission (16) connecting the primary to the secondary shaft. The control system monitors one or more operating parameters of the generator and retards the secondary shaft by regulating the braking power of the eddy-current brake depending on the monitored operating parameters of the generator. The control system further monitors operating parameters of the eddy-current brake and activates the friction brake(s) to bring the rotor to a halt when stopping of the wind turbine is mandated.

## Description

### Background of the Disclosure

The invention relates to vertical-axis wind turbines (VAWTs).

One of the great advantages of vertical-axis wind turbines, regardless of their rotor area, is the symmetrical rotor structure. The rotor blades need not be turned into the wind to generate a lift force. The rotor is independent of wind direction and thus makes pitch and yaw control unnecessary, unlike in horizontal-axis wind turbines (HAWTs).

In VAWTs, it is a complex task to adjust the pitch or angle of attack of the airfoils. However, such VAWTs with active blade control are known, e.g., from WO 2015/185299 A1 or from US 2023/417219 A1. However, the blade drives in VAWTs have to withstand extreme mechanical loads and are thus susceptible to wear, which has a negative impact on the lifetime and the maintenance costs. It should be noted, in particular, that in VAWTs, unlike in horizontal-axis wind turbines, the pitch of each blade has to be adjusted essentially at the frequency of the rotation. Furthermore, active blade control cannot be performed in VAWTs with helical blades. Finally, known active blade control systems aim at improving transfer of power from the wind to the turbine. These systems are not well suited for effectively limiting the rotational speed of VAWTs in conditions of strong winds.

Therefore, the blades can only be turned out of the main wind direction with a very high technical effort, which then puts at stake the economic viability. If the nominal parameters (nominal speed and nominal torque) of the built-in generator are reached at a certain wind speed (nominal wind speed), in the event of a further increase of the windspeed, the generator would be overloaded and damaged after a short time. This is usually prevented with a friction brake, which converts the excess energy into heat. Consequently, this braking can only be conducted for a short time, otherwise the brake disc and brake pads would overheat. Before this happens, a so-equipped VAWT must be braked to a standstill. Therefore, VAWTs relying on this braking strategy suffer from high downtimes or need to be overdesigned, which makes cost-efficient operation difficult to achieve.

JP2017053304 discloses a wind turbine generator comprising a main generator and an auxiliary generator. When there is strong wind, both generators are used to generate electric power and the rotor is decelerated by the brake torque generated by the regenerative power generation. The rotor is thus prevented from rotating beyond the rated rotation speed. To connect and disconnect the auxiliary generator to the drivetrain, a clutch is necessary. This makes the system relatively complex. Furthermore, the addition of an auxiliary generator to absorb power peaks effectively corresponds to overdesigning the system.

DE 3939863 discloses a wind power plant with eddy-current rotor brake. The eddy current brake is brought into operation by an electronic switching circuit when the speed of the rotor exceeds a certain threshold below the maximum rotation speed.

Aspects of the invention aim at improving the cost-benefit ratio of VAWTs.

### Summary of the Disclosure

In a first aspect, the invention relates to a lift-type VAWT, comprising:
a rotor with airfoils (blades),
a generator for converting mechanical power into electric power,
a drive train for transmitting mechanical power from the rotor to the generator,
a braking system including an eddy-current brake and at least one friction brake (preferably a hydraulic brake), and
a control system.

The drive train comprises a primary, low-speed, shaft on which the rotor is mounted, a secondary, high-speed shaft connected to the generator, and a transmission (e.g., a gearbox) connecting the primary shaft to the secondary shaft.

The eddy-current brake comprises a conductive rotor mounted on the secondary shaft and one or more magnets, preferably one or more electromagnets, for inducing eddy currents in the conductive rotor and thus braking the drive train.

The control system is operatively connected to the eddy current brake for controlling its braking power. The control system is configured to monitor one or more operating parameters of the generator and to retard the secondary shaft by regulating the braking power of the eddy-current brake depending on the monitored operating parameters of the generator. The control system is further configured to monitor one or more operating parameters of the eddy-current brake and to activate the friction brake to bring the rotor to a halt when the control system derives from the monitored operating parameters of the eddy-current brake that stopping of the wind turbine is mandated.

The use of the eddy-current brake allows operation of the VAWT in conditions of stronger winds than conventional VAWTs. Its cut-out speed, i.e., the highest mean wind speed at which the wind turbine is designed to produce power, is higher than for a VAWT without eddy-current braking. The concept allows the VAWT to remain operational over longer periods of time, even in intense gusts and peaks of wind in a turbulent wind zone, as well as in wind areas with regularly higher average wind speeds, e.g., in coastal areas. The concept is based on the fact that the VAWT is enabled to generate electrical power until the physical limits of both the built-in generator and the eddy-current brake are reached. This allows the VAWT to remain in operation for much higher wind speeds. Furthermore, braking to a standstill may largely be carried out using only the eddy-current brake, which reduces wear. Except in emergency situations, the friction brake needs to be activated only at low speeds to brake the system to a standstill.

As used herein, the expression electromagnet designates a coil of wire that produces a magnetic field when an electric current (excitation current) flows through it. The coil may include or not include a magnetic core that concentrates the magnetic flux.

It will be appreciated that the eddy-current brake is arranged to act on the secondary shaft, i.e., on the high-speed-side of the drive train. This implies that a much more compact and less costly eddy-current brake can be used. Contrary to the eddy-current brake, the friction brake is preferably arranged on the low-speed-side of the drivetrain.

The control system may include one or more computers, microcontrollers, and/or data processing units. The control system, could, e.g., comprise or consist of one or more application-specific integrated circuits (ASICs), systems on a chip (SoC), programmable logic devices (PLDs), erasable programmable logic devices (EPLDs), programmable logic arrays (PLAs), field-programmable gate arrays (FPGAs), complex programmable logic devices (CPLD), generic microprocessors and/or other hardware adequately programmed for the task. The control system may comprise a local area network (LAN), interconnecting the individual components of the control system and the components of the VAWT, such as, in particular, the generator, the eddy-current brake, the friction brake, and/or any sensors and/or actuators.

The one or more operating parameters of the generator monitored by the control system may, e.g., include rotational speed and/or torque and the control system may be configured to regulate the braking power of the eddy-current brake responsive to rotational speed and/or torque. The control system may be configured to monitor further operating parameters of the generator, such as, e.g., its temperature, vibrations, output power, etc.

The control system may be configured to regulate the braking power of the eddy-current brake so as to minimize an error value *e* = max (*x* - *x_{target},* 0), where *x* designates rotational speed or torque, *x_{target}* designates a target rotational speed or torque, respectively, and max(*a*, *b*) is the maximum function which returns the larger of its arguments *a* and *b.* In the above formula, a sign convention is assumed such that stronger wind produces a higher rotational speed or torque: if the wind speed increases, *x* also increases. In other words, the control system may be configured to regulate the braking power of the eddy-current brake to zero as long as the rotational speed or torque remains below *x_{target}* and to brake the drivetrain when the rotational speed or torque exceeds *x_{target}.* The control system may implement a proportional-control loop, a proportional-integral (PI) control loop, a proportional-integral-derivative (PID) control loop or a more sophisticated control. The target value *x_{target}* may correspond to the rated rotational speed or rated torque (*x_{rated}*) of the generator (*x_{target}* = *x_{rated}*) or to the rated rotational speed or rated torque of the generator minus some safety margin *Δx_{safety}* (*x_{target}* = *x_{rated}* - *Δx_{safety}*). The target value *x_{target}* could be constant over time. However, it is also possible to dynamically adapt the target value *x_{target}.* For instance, one could increase the safety margin (or decrease *x_{target}*) in gusty wind conditions, when an anomaly is detected, etc.

The one or more operating parameters of the eddy-current brake monitored by the control system may include at least one of a temperature of the eddy-current brake, a temperature gradient of the eddy-current brake and an excitation current across the eddy-current brake. According to a preferred embodiment of the invention, the one or more operating parameters of the eddy-current brake monitored by the control system include the temperature of the electromagnets of the eddy-current brake, and the control system is configured to activate the friction brake to bring the rotor to a halt when the temperature of the eddy-current brake exceeds a threshold. It should be noted that the control system may be configured to take other monitored parameters (in particular, wind speed, state of the connection to the grid, etc.) into account in order to determine whether a normal or emergency shutdown of the turbine should be carried out.

The control system may be configured to execute an eddy-current-brake-assisted stoppage procedure when the control system derives from the monitored operating parameters of the eddy-current brake that stopping (a shutdown) of the wind turbine is mandated and that the eddy-current brake is operational. The eddy-current-brake-assisted stoppage procedure may include braking the drivetrain simultaneously with the eddy-current brake and the friction brake at least during a part of the stoppage procedure. Preferably, the eddy-current-brake-assisted stoppage procedure may include, in a first phase, braking the drivetrain with the eddy-current brake only, and, in a further phase, activating the friction brake to bring the rotor to a halt (standstill).

The control system may be configured to execute an emergency stoppage procedure when the control system derives from the monitored operating parameters of the eddy-current brake that the eddy-current brake is no longer operational, the emergency stoppage procedure including bringing the rotor to a halt using only the friction brake(s).

The one or more magnets of the eddy-current brake may include one or more electromagnets, in which case the control system is preferably configured to regulate the braking power of the eddy-current brake by controlling an excitation current in the one or more electromagnets.

The VAWT preferably comprises an uninterruptible power supply to provide automated backup electric power to the control system and to the braking system.

According to a preferred embodiment of the invention, the rotor is a fixed-geometry rotor.

The VAWT may be a small wind turbine according to the definition given in standard IEC 61400-2:2013, i.e., a wind turbine having 200 m² or less rotor swept area that converts kinetic energy in the wind into electrical energy.

The eddy-current brake may include a cooling circuit for cooling the conductive rotor and/or the one or more (electro-) magnets using a coolant fluid, the cooling circuit comprising at least one coolant intake for letting in cold coolant, at least one coolant outlet for letting out heated-up coolant and a blower or pump driven by the secondary shaft for propelling coolant in the cooling circuit. The cooling circuit may use air as the coolant. The cooling circuit may comprise a closed coolant loop, including a heat exchange between the outlet and the intake in order to carry the heat away. Alternatively, the cooling circuit may have an open loop configuration (with or without a heat exchanger to carry away the heat from the coolant before rejecting it), which is particularly well suited when ambient air is used for cooling the eddy-current brake. The blower may be integrated with the conductive rotor. For instance, the conductive rotor could comprise spokes form a fan, capable of driving a coolant flow through the cooling circuit. The advantage of such an arrangement is that the conductive rotor rotates and cools the eddy-current brake even if it is not activated. Accordingly, the eddy-current brake may be effectively cooled when it is operated intermittently.

The heat produced by the eddy-current brake could be used for heating a building, producing hot water, supplying a seasonal thermal energy storage, etc.

Preferably, the VAWT comprises a heat reservoir for storing heat produced by the eddy current brake.

The wind turbine may comprise a heat exchanger or a heat pump for transferring heat from the eddy-current brake to the heat reservoir.

In a further aspect, the invention thus relates to a cogeneration plant for producing electrical power and useful heat.

It will be appreciated that the possibility of producing heat alongside electrical power makes the VAWT according to the invention particularly attractive for regions with higher wind speeds in winter, when there is a higher demand for heat.

In the present document, the verb "to comprise" and the expression "to be comprised of" are used as open transitional phrases meaning "to include" or "to consist at least of". Unless otherwise implied by context, the use of singular word form is intended to encompass the plural, except when the cardinal number "one" is used: "one" herein means "exactly one". Ordinal numbers ("first", "second", etc.) are used herein to differentiate between different instances of a generic object; no particular order, importance or hierarchy is intended to be implied by the use of these expressions. Furthermore, when plural instances of an object are referred to by ordinal numbers, this does not necessarily mean that no other instances of that object are present (unless this follows clearly from context). When this description refers to "an embodiment", "one embodiment", "embodiments", etc., this means that the features of those embodiments can be used in the combination explicitly presented but also that the features can be combined across embodiments without departing from the invention, unless it follows from context that features cannot be combined.

### Brief Description of the Drawings

By way of example, preferred, non-limiting embodiments of the disclosure will now be described in detail with reference to the accompanying drawings, in which:
Fig. 1: is a perspective, partially cut-away view of a VAWT according to an embodiment of the invention;
Fig. 2: is a schematic illustration of the control system of the VAWT of Fig.1;
Fig. 3: is a diagram showing the performance curve of a conventional wind turbine;
Fig. 4: is a diagram showing the performance curve of a VAWT according to an embodiment of the invention;
Fig. 5: is a schematic drawing of an eddy-current brake supplying heat to a heat reservoir.

### Detailed Description of Preferred Embodiments

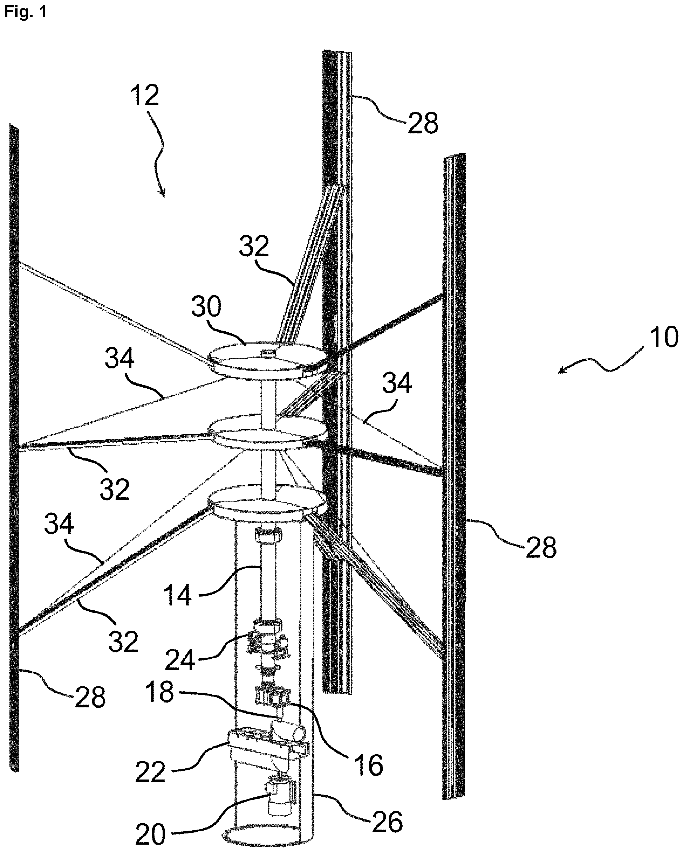

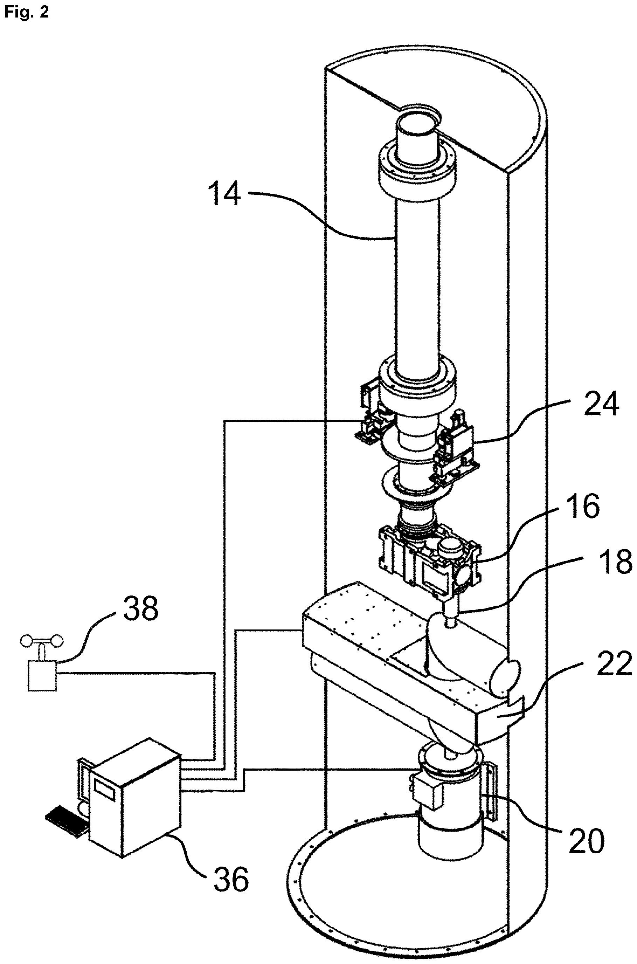

A VAWT 10 according to an embodiment of the invention is discussed with reference to Figs. 1 and 2. The VAWT 10 comprises a wind-driven rotor 12, which is mounted on a primary shaft 14. The primary shaft is part of a drivetrain that further includes a fixed-ratio gearbox 16 and a secondary shaft 18. The secondary shaft drives a generator 20, which preferably is a synchronous generator. The gear ratio of the gearbox may, e.g., be selected between 10 and 30, corresponding to the rotational speed ratio between the secondary shaft and the primary shaft.

The VAWT 10 further comprises a braking system including an eddy-current brake 22 and at least one friction brake 24. The eddy-current brake 22 comprises a conductive rotor (e.g., a disc or a drum) mounted on the secondary shaft 18 and several electromagnets for inducing eddy currents in the conductive rotor and thus braking the drive train. The friction brake 24 is arranged on the primary shaft 14.

The friction brake 24, the gearbox 16, the secondary shaft 18, the eddy-current brake 22 and the generator 20 are arranged in the interior of a tower 26, which serves as a support structure for the primary shaft 14 and the wind-driven rotor 12. The tower supports the primary shaft on bearings for rotation about the primary shaft axis.

In a preferred arrangement of the eddy-current brake, the conductive rotor is welded to the secondary shaft. The casing supporting the electromagnets is fixed on structural elements, e.g., steel beams, of the tower 26. It will be appreciated that the eddy-current brake needs no rare-earth elements. In a preferred version, the electromagnets of the eddy-current brake consist of a steel alloy and copper coils. The electromagnets are mounted at a small distance from the surface of the conductive rotor. The latter is preferably made of highly conductive steel alloy, in which eddy currents are generated when the brake is active.

In the illustration, the rotor 12 is of the H-Darrieus type and comprises three vertical airfoils 28, fixed to hubs 30 on the primary shaft by supporting arms 32 and tethers 34. The geometry of the rotor 12 is fixed, i.e., the pitch of the vertical airfoils is not dynamically adjusted as the rotor 12 rotates in the wind. It should be noted that other rotor configurations are compatible with the present invention, e.g., the Darrieus rotor with helical blades, the "eggbeater" rotor, the combined Darrieus-Savonius rotor, etc. fixed-geometry rotors are preferred in the context of the invention.

The VAWT 10 further comprises a control system 36 for controlling the different components of the VAWT, in particular the generator 20 and the brakes 22, 24. The control system 36 comprises data links to the controllers of the components of the VAWT 10. It may have further data links to external components, such as e.g., a weather station 38, to the Internet or a private data network.

A purely lift-type VAWT can only generate electrical power above a certain rotational speed of the wind-driven rotor and a certain wind speed (cut-in speed). This means that the VAWT needs to be started with an auxiliary motor or by using the generator in motor mode. When the minimum speed has been reached and there is sufficient wind, the control system can switch to generator mode. Wind-driven operation of the VAWT is limited, in practice, by the rated generator parameters.

The control system 36 monitors operating parameters of the generator 20, in particular the rotational speed of the secondary shaft 18, the torque on the secondary shaft and the produced electrical power. The control system 36 further monitors operating parameters of the eddy current brake, e.g., its temperature, the excitation current, braking power, etc.

The control system 36 is configured to retard the secondary shaft 18 (and thus the drivetrain as a whole) by regulating the braking power of the eddy-current brake 22 depending on the monitored operating parameters of the generator 20. The control system 36 is further configured to activate the friction brake 24 to bring the rotor to a standstill when it derives from the monitored operating parameters of the eddy-current brake 22 that shutting down the VAWT is mandated.

In conventional wind turbines, when the physical limits (rotational speed, torque) of the generator are reached, which may, e.g., be the case at a wind speed (Vw) of about 12 m/s, the speed of the input shaft may be kept constant for a short time (at most 1-2 minutes) by means of a friction brake. If the wind does not weaken within this period, the wind turbine needs to be brought to standstill. This approach prevents power generation at higher wind speeds and leads to significant wear and tear and need for maintenance.

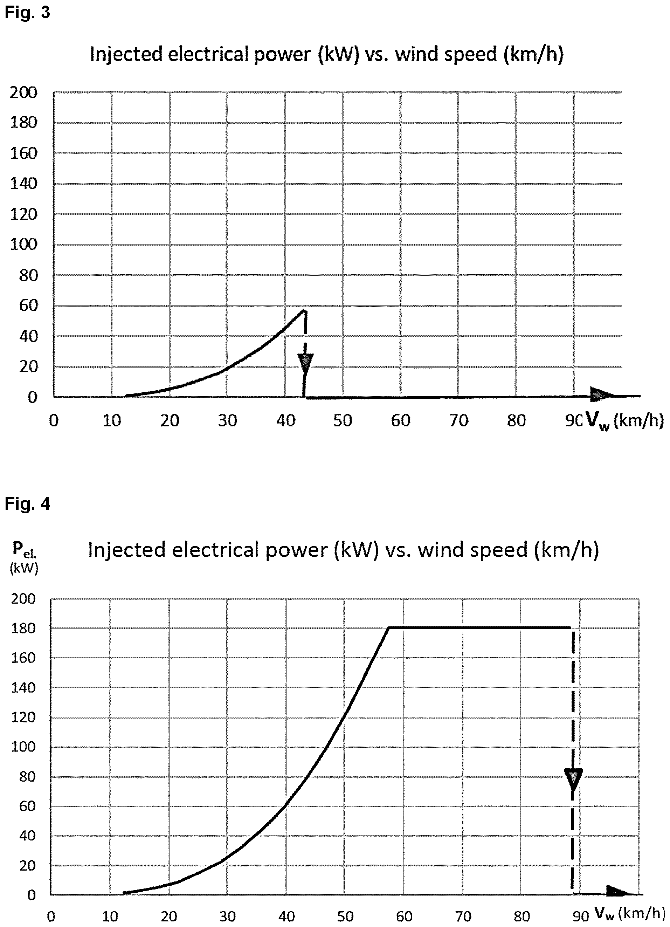

Fig. 3 shows the electrical power generated by a conventional VAWT as a function of the wind speed. The cut-out speed in the illustrated case is 12 m/s (43.2 km/h). When the wind speed exceeds that value for a certain time (at most a few minutes), a conventional VAWT has to be brought to a standstill, which reduces the generated electrical power to 0. The existing VAWT producers use the same cut-out speed of about 43 km/h (12 m/s), as the HAWT-producers, as this wind speed represents generally the highest wind power density (frequency × speed), and the wind frequency decreases also in general for higher wind speeds. The HAWTs, however, can manage wind peaks and higher wind speeds due to the pitch control, but most existing VAWTs use a friction brake that overheats after a short time of 1-2 minutes. Therefore, the cut-out speed for VAWTs using a friction brake is about 43 km/h (12 m/s) average wind speed.

Fig. 4 shows the performance curve of a VAWT according to the invention. When the wind speed exceeds the value corresponding to the power rating of the generator, the control system controls the eddy current brake in such a way that it brakes the secondary shaft and thus the entire drivetrain and the rotor so that the rotational speeds remain essentially constant. The control system keeps the speed of the secondary shaft at the rated speed of the generator. The excess power is converted into heat in the eddy-current brake. The cut-out speed of the VAWT is thus shifted to higher wind speeds. In the case of Fig. 4, the VAWT reaches its rated power at a wind speed of 57 km/h (15,83 m/s), as this is the wind speed at which the generator reaches its nominal values in the illustrated case. The cut-out speed corresponds to about 88 km/h (24,44 m/s), as at this wind speed the nominal values of generator torque and the maximum brake torque of the eddy-current brake are reached. The performance curve of a VAWT according to the invention comprises a plateau region, where the produced electrical power does not increase with the windspeed but remains constant. It is thus similar to the performance curve of a HAWT with active pitch control.

The control system may be configured to regulate the braking power of the eddy-current brake so as to maintain the rotational speed *ω* of the secondary shaft at a target value, *ω_{target}*. The target value *ω_{target}* may be selected to correspond to the rated rotational speed of the generator *ω_{rated}* or to the rated rotational speed minus a first safety margin *Δω*_{*safety,*1}. When *ω* ≤ *ω_{target},* the control system keeps the eddy-current brake deactivated or switches it off (if *ω* drops below *ω_{target}* from higher values). When *ω > ω_{target},* the control system activates the eddy current brake by controlling the excitation current across the electromagnets of the eddy-current brake. The control system thus minimizes the error value *e* = max (*ω* - *ω_{target},* 0). The excitation current could be regulated by PWM (pulse-width modulation) or by current amplitude modulation. The control system may implement a proportional-control loop, a proportional-integral (PI) control loop, a proportional-integral-derivative (PID) control loop or a more sophisticated control. The target value *ω_{target}* could be constant over time. Alternatively, the control system may be configured to dynamically adapt the target value *ω_{target}.* For instance, the control system may be configured to increase the safety margin (or to decrease *ω_{target}*) in gusty wind conditions, when an anomaly is detected, etc.

The eddy-current brake is inactive as long as the rated speed and/or torque of the generator are not reached. When the nominal speed and/or torque of the generator is/are exceeded, the control system energizes the eddy-current brake until the generator operates again at the target value(s). Despite the increase in wind speed, the rotor speed remains essentially constant. It should be noted, however, that as in any control, there may be residual and transient errors. Excess wind power is converted into heat in the eddy-current brake. When the temperature of the eddy-current brake has reached a certain value (shut-off temperature), the friction brake is switched on to slow down the wind turbine to a standstill. The eddy current brake may support the friction brake.

The control system is configured to bring the VAWT to a standstill when the cut-out wind speed of the VAWT is exceeded. The control system is preferably configured to execute an eddy-current-brake-assisted stoppage procedure in that event, provided that it determines that the eddy-current brake is operational. Such an eddy-current-brake-assisted stoppage procedure preferably includes, in a first phase, braking the drivetrain with the eddy-current brake only, and, in a further phase, at a lower rotational speed *ω*, activating the friction brake to bring the rotor to standstill. The value of the cut-out wind speed of the VAWT is preferably chosen such that the corresponding rotational cut-out speed *ω_{cut-out}* is below the rated rotational speed of the eddy-current brake by a second safety margin, *Δω_{safety,2},* and that the second safety margin is sufficient for carrying out the eddy-current-brake-assisted stoppage procedure without a failure of the eddy-current brake, in particular due to overheating.

The control system may be configured to monitor the occurrence of other events in which a shutdown of the VAWT is mandated, e.g., a failure of the power grid. Depending on the severity of the event, the control system may conduct a normal shutdown or an emergency shutdown.

The control system is configured to monitor the condition of the eddy-current brake. For instance, the control system may activate the friction brake to bring the rotor to a halt when the temperature of the eddy-current brake exceeds a threshold or when the communication between the control system and the eddy-current brake is lost and could not be restored within a predetermined time. In such an event, the control system may be configured to execute an emergency stoppage procedure, wherein the VAWT is brought to standstill using only the friction brake.

The electrical power needed for the eddy-current brake is preferably taken from the power grid. The VAWT is preferably equipped with an uninterruptible power supply (UPS) having a capacity sufficient for a shutdown of the VAWT, i.e., at least an emergency shutdown. However, the UPS is more preferably dimensioned such that an eddy-current-brake-assisted stoppage procedure can be safely performed in the event of a blackout.

Alternatively, the VAWT may be configured for island-mode operation, in which case a battery storage powered by the generator is necessary to operate the eddy-current brake.

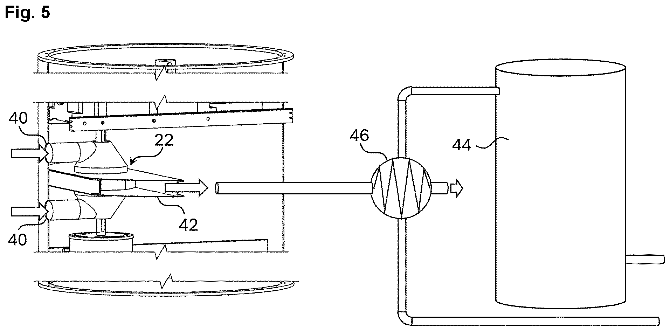

The eddy-current brake 22 is preferably constructed in a way that ambient air permanently cools it during operation of the VAWT. As can be seen in Figs. 2 and 5, the eddy-current brake 22 includes a cooling circuit for cooling the conductive rotor and the electromagnets. The cooling circuit comprises at least one intake 40 for letting in ambient air, and at least one outlet 42 for letting out the heated-up air. The conductive rotor of the eddy-current brake may be configured as a fan, so that, when the secondary shaft rotates, air is drawn from the inlet and blown to the outlet, cooling the electromagnets and the conductive rotor. This arrangement allows cooling the eddy current brake in-between the braking phases during normal operation of the VAWT. The eddy-current brake may thus be permanently cooled when it is operated intermittently.

The heat transferred from the electromagnet and the conductive rotor to the air heats the airflow up to high temperatures, e.g., to 190°C or more, depending on the eddy-current brake. The heat may be evacuated into the environment or be transferred to a heat storage 44. In order to prevent the eddy current brake from heating up the interior of the tower too much, it is preferably wrapped with a thermal insulation layer.

According to preferred embodiments, the hot air, before being released into the environment, can be used to supply heat to a heat reservoir 44 or a heat customer, e.g., via a heat exchanger 46. For instance, the hot air could be channeled into a building for heating it or for hot water production.

While specific embodiments have been described herein in detail, those skilled in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

## Claims

1. A lift-type vertical-axis wind turbine, comprising
a rotor with airfoils,
a generator for converting mechanical power into electric power,
a drive train for transmitting mechanical power from the rotor to the generator, the drive train comprising a primary, low-speed, shaft on which the rotor is mounted, a secondary, high-speed, shaft connected to the generator, and a transmission connecting the primary shaft to the secondary shaft,
a braking system including an eddy-current brake and at least one friction brake, the eddy-current brake comprising a conductive rotor mounted on the secondary shaft and one or more (electro-)magnets for inducing eddy currents in the conductive rotor and thus braking the drive train;
a control system operatively connected to the eddy current brake for controlling a braking power thereof, wherein the control system is configured to monitor one or more operating parameters of the generator and to retard the secondary shaft by regulating the braking power of the eddy-current brake depending on the monitored operating parameters of the generator;
and wherein the control system is configured to monitor one or more operating parameters of the eddy-current brake and to activate the friction brake to bring the rotor to a halt when the control system derives from the monitored operating parameters of the eddy-current brake that stopping of the wind turbine is mandated.

2. The wind turbine as claimed in claim 1, wherein the one or more operating parameters of the generator monitored by the control system include rotational speed and/or torque and wherein the control system is configured to regulate the braking power of the eddy-current brake responsive to rotational speed and/or torque.

3. The wind turbine as claimed in claim 2, wherein the control system is configured to regulate the braking power of the eddy-current brake so as to minimize an error value *e* = max (*x* - *x_{target},* 0), where *x* designates rotational speed or torque and *x_{target}* designates a target rotational speed or torque, respectively.

4. The wind turbine as claimed in any one of claims 1 to 3, wherein the one or more operating parameters of the eddy-current brake monitored by the control system include at least one of a temperature of the eddy-current brake, a temperature gradient of the eddy-current brake and an excitation current across the eddy-current brake.

5. The wind turbine as claimed in claim 4, wherein the one or more operating parameters of the eddy-current brake monitored by the control system include the temperature of the eddy-current brake, and wherein the control system is configured to activate the friction brake to bring the rotor to a halt when the temperature of the eddy-current brake exceeds a threshold.

6. The wind turbine as claimed in any one of claims 1 to 5, wherein the control system is configured to execute an eddy-current-brake-assisted stoppage procedure when the control system derives from the monitored operating parameters of the eddy-current brake that stopping of the wind turbine is mandated and that the eddy-current brake is operational, the eddy-current-brake-assisted stoppage procedure including, in a first phase, braking with the eddy-current brake only, and, in a further phase, activating the friction brake to bring the rotor to a halt.

7. The wind turbine as claimed in any one of claims 1 to 6, wherein the control system is configured to execute an emergency stoppage procedure when the control system derives from the monitored operating parameters of the eddy-current brake that the eddy-current brake is no longer operational, the emergency stoppage procedure including bringing the rotor to a halt using only the friction brake.

8. The wind turbine as claimed in any one of claims 1 to 7, wherein the one or more magnets of the eddy-current brake include one or more electromagnets and wherein the control system is configured to control an excitation current in the one or more electromagnets to regulate the braking power of the eddy-current brake.

9. The wind turbine as claimed in any one of claims 1 to 8, wherein the rotor is a fixed-geometry rotor.

10. The wind turbine as claimed in any one of claims 1 to 8, wherein the wind turbine has 200 m² or less rotor swept area that converts kinetic energy in the wind into electrical energy.

11. The wind turbine as claimed in any one of claims 1 to 10, wherein the eddy-current brake includes a cooling circuit for cooling the conductive rotor and/or the one or more magnets using a coolant fluid, the cooling circuit comprising at least one coolant intake for letting in cold coolant, at least one coolant outlet for letting out heated-up coolant and a blower or pump driven by the secondary shaft for propelling coolant in the cooling circuit.

12. The wind turbine as claimed in claim 11, comprising a heat reservoir for storing heat transferred from the eddy-current brake to the heat reservoir.

13. The wind turbine as claimed in claim 12, comprising a heat exchanger or a heat pump for transferring heat from the eddy-current brake to the heat reservoir.

14. A cogeneration plant comprising the wind turbine as claimed in any one of claims 10 to 13.
